(19) **Europäisches Patentamt**
**European Patent Office**
**Office européen des brevets**

(11) **EP 2 126 789 B1**

(12) **EUROPEAN PATENT SPECIFICATION**

(45) Date of publication and mention
of the grant of the patent:
**10.10.2012 Bulletin 2012/41**

(51) Int Cl.:
***G06K 9/46*** *(2006.01)*  ***G06F 17/30*** *(2006.01)*

(21) Application number: **07858778.9**

(22) Date of filing: **06.12.2007**

(86) International application number:
**PCT/GB2007/004676**

(87) International publication number:
**WO 2008/084185 (17.07.2008 Gazette 2008/29)**

(54) **IMPROVED IMAGE IDENTIFICATION**

VERBESSERTE BILDIDENTIFIKATION

IDENTIFICATION D'IMAGE AMÉLIORÉE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.01.2007 GB 0700468**

(43) Date of publication of application:
**02.12.2009 Bulletin 2009/49**

(60) Divisional application:
**11195008.5 / 2 450 833**

(73) Proprietors:
• **Mitsubishi Electric Information Technology Centre**
**Europe B.V.**
**Guildford,**
**Surrey GU2 7YD (GB)**
Designated Contracting States:
**GB**
• **Mitsubishi Electric Corporation**
**Chiyoda-ku**
**Tokyo 100-8310 (JP)**
Designated Contracting States:
**AT BE BG CH CY CZ DE DK EE ES FI FR GR HU IE IS IT LI LT LU LV MC MT NL PL PT RO SE SI SK TR**

(72) Inventors:
• **BRASNETT, Paul**
**Surbiton**
**Surrey KT5 8JW (GB)**
• **BOBER, Miroslaw**
**Guildford**
**Surrey GU1 2SE (GB)**

(74) Representative: **Picker, Madeline Margaret et al**
**R.G.C. Jenkins & Co**
**26 Caxton Street**
**London SW1H 0RJ (GB)**

(56) References cited:
**EP-A- 1 498 848     US-A1- 2002 028 027**

• **TABBONE ET AL: "A new shape descriptor defined on the Radon transform" COMPUTER VISION AND IMAGE UNDERSTANDING, ACADEMIC PRESS, SAN DIEGO, CA, US, vol. 102, no. 1, April 2006 (2006-04), pages 42-51, XP005311568 ISSN: 1077-3142**
• **PETROU M ET AL: "AFFINE INVARIANT FEATURES FROM THE TRACE TRANSFORM" IEEE TRANSACTIONS ON PATTERN ANALYSIS AND MACHINE INTELLIGENCE, IEEE SERVICE CENTER, LOS ALAMITOS, CA, US, vol. 26, no. 1, January 2004 (2004-01), pages 30-44, XP001185854 ISSN: 0162-8828 cited in the application**
• **KADYROV A ET AL: "THE TRACE TRANSFORM AND ITS APPLICATIONS" IEEE TRANSACTIONS ON PATTERN ANALYSIS AND MACHINE INTELLIGENCE, IEEE SERVICE CENTER, LOS ALAMITOS, CA, US, vol. 23, no. 8, August 2001 (2001-08), pages 811-828, XP001091621 ISSN: 0162-8828 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- ROTH V: "Panel: content-based image indexing and retrieval with mobile agents" AGENT SYSTEMS AND APPLICATIONS, 1999 AND THIRD INTERNATIONAL SYMPOSIUM ON MOBILE AGENTS. PROCEEDINGS. FIRST INTERNATIONAL SYMPOSIUM ON PALM SPRINGS, CA, USA 3-6 OCT. 1999, LOS ALAMITOS, CA, USA,IEEE COMPUT. SOC, US, 3 October 1999 (1999-10-03), pages 260-261, XP010358578 ISBN: 0-7695-0342-X
- MCLAUGHLIN R A: "Randomized Hough Transform: Improved ellipse detection with comparison" PATTERN RECOGNITION LETTERS, NORTH-HOLLAND PUBL. AMSTERDAM, NL, vol. 19, no. 3-4, March 1998 (1998-03), pages 299-305, XP004131792 ISSN: 0167-8655
- KADYROV AND M PETROU A: "Object signatures invariant to affine distorsions derived from the Trace transform", IMAGE AND VISION COMPUTING, ELSEVIER, GUILDFORD, GB, vol. 21, 1 January 2003 (2003-01-01), pages 1135-1143, XP002495049, ISSN: 0262-8856, DOI: DOI: 10.1016/J.IMAVIS.2003.08.013

**Description**

**BACKGROUND OF THE INVENTION**

**Field of the Invention**

The present invention relates to a method and apparatus for representing an image, and, in addition, a method and apparatus for comparing or matching images, for example, for the purposes of searching or validation.

**Description of the Background Art**

This invention relates to improvements upon the image identification technique described in co-pending European patent application EP 06255239.3.

Details of the invention and embodiments in EP 06255239.3 apply analogously to the present invention and embodiments.

The image identification method and apparatus described in EP 06255239.3, which extracts a short binary descriptor from an image (see Fig. 2), addresses many drawbacks of the prior art, and in particular is characterised by:

- reduced computational complexity for both feature extraction and matching,
- reduced the image descriptor size,
- increased robustness to various image modifications, and
- reduced false alarm rate to 1ppm level while maintaining detection rate of approximately ~80% for a wide range of modifications.

However, in practical applications higher detection rates are desirable in particular, it would be desirable to increase the average detection rate to above 98%, and also to significantly improve robustness to noise and histogram equalisation modifications.

TABBONE ET AL: "A new shape descriptor defined on the Radon transform" COMPUTER VISION AND IMAGE UNDERSTANDING, ACADEMIC PRESS, SAN DIEGO, CA, US, vol. 102, no. 1, April 2006, pages 42-51 relates to a shape descriptor which is an adaptation of the Radon transform.

EP 1 498 848 A relates to method of representing a group of frames or a group of pictures using texture descriptors, for example, using the Radon transformation and one-dimensional Fourier transform.

The Article " Affine invariant features from the trace transform" by Maria Petrou and Alexander Kadyrov, in IEEE Transactions on Pattern Analysis and Machine Intelligence, January 2004, addresses the trace transform which is a generalization of the Radon transform that allows one to construct image features that are invariant to a chosen group of image transformations. In the Article, they propose a methodology and appropriate functionals that can be computed from the image function and which can be used to calculate features invariant to the group of affine transforms.

**SUMMARY OF THE INVENTION**

According to a first aspect, the present invention provides a method of deriving a representation of an image as defined in accompanying claim 1.

Further aspects of the present invention include use of a representation of an image derived using a method according to a the first aspect of the present invention, an apparatus for performing the method according to the first aspect of the present invention, and computer-readable storage medium comprising instructions which, when executed, perform the method according to the first aspect of the present invention.

Preferred and optional features of embodiments of the present invention are set out in the dependent claims.

The present invention concerns a new method of extracting visual identification features from the Trace transform of an image (or an equivalent two-dimensional function of the image). The method may be used to create a multi-resolution representation of an image by performing region-based processing on the Trace transform of the image, prior to extraction of the identifier e.g. by means of the magnitude of the Fourier Transform.

In the present application, the term "functional" has its normal mathematical meaning. In particular, a functional is a real-valued function on a vector space V, usually of functions. In the case of the Trace transform, functionals are applied over lines in the image.

In the method described in co-pending patent application EP 06255239.3 the Trace transform is computed by tracing an image with straight lines along which certain functional $T$ of the image intensity or colour function are calculated. Different functionals $T$ are used to produce different Trace transforms from a single input image. Since in the 2D plane a line is characterised by two parameters, distance $d$ and angle $\theta$, a Trace transform of the image is a 2D function of the parameters of each tracing line. Next, the "circus function" is computed by applying a diametrical functional $P$ along the columns of the Trace transform. A frequency representation of the circus function is obtained (e.g. a Fourier transform) and a function is defined on the frequency amplitude components and its sign is taken as a binary descriptor.

A method according to embodiments of the present invention may use similar techniques to derive a representation of an image. However, a reduced resolution function of the image is derived, such as a reduced resolution Trace transform, prior to performing further steps to derive the representation of the image (e.g. binary descriptor). The reduction in resolution should preserve the essential elements that are unique to the image (i.e. its visual identification features), whilst reducing the quantity of data for processing. Typically, the derived reduced resolution function of the image, incorporates, by processing, representative values for selected or sampled parts of the image, as will be apparent from the description below.

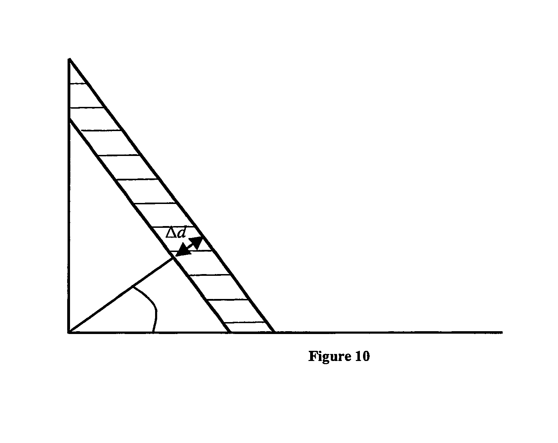

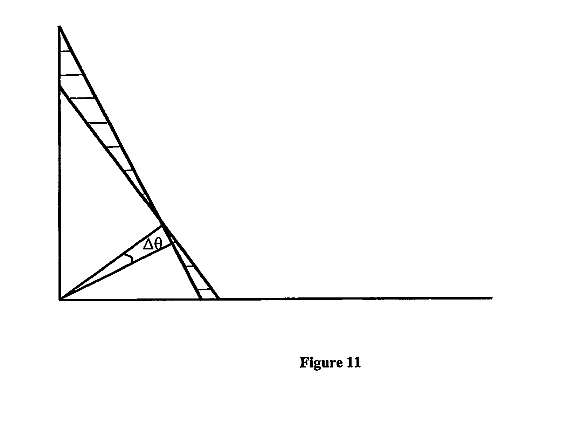

According to one embodiment of the present invention, the reduced resolution function of the image is derived by tracing the image with sets of lines, where the parameters of these lines are of a predetermined interval $\Delta d$ and/or $\Delta\theta$, and deriving a Trace transform (or equivalent) using all of the sets of lines (instead of all lines across the image). The lines may correspond to strips (as illustrated in Fig. 10) and/or double cones (as illustrated in Fig 11) in the image domain. A reduced resolution (i.e. coarser resolution) Trace transform of the image is thus derived, as described in more detail below.

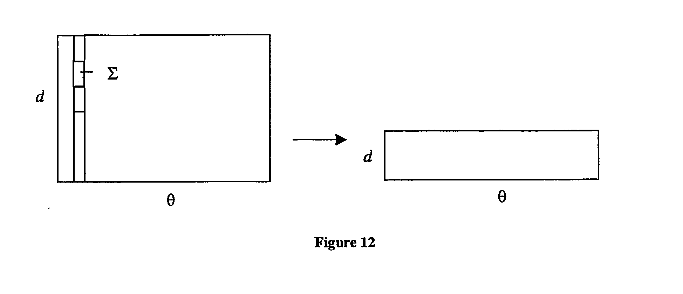

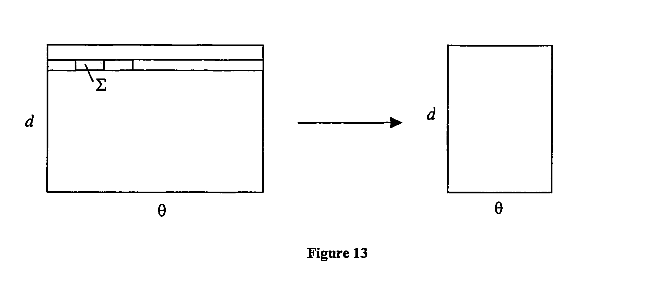

According to another embodiment of the present invention, the Trace transform (or equivalent) is first derived in the conventional manner, by tracing all lines across the image. The Trace transform of the image is then traced with strips at different values of the angle parameter $\theta$, and resolution reduction is performed over intervals of the distance parameter $d$ (as illustrated in Fig. 12) and/or the Trace transform is traced with strips at different values of the distance parameter $d$, and resolution reduction is performed over intervals of the angle parameter $\theta$ (as illustrated in Fig. 13) in the Trace domain to derive a reduced resolution two dimensional function of the image, as described in more detail below.

Advantageously, the method of this embodiment of the present invention can be implemented very efficiently by implicitly computing the Trace transform values along strips and/or cones in the Trace transform domain, as explained in further detail below.

As in the method disclosed in co-pending patent application EP 06255239.3, a method according to an embodiment of the present invention combines selected fragments from a 'family' of identifiers obtained by using different functionals. In addition, in some embodiments, identifiers obtained with strips and/or double cones are combined into a single descriptor. In addition, strips of different width and/or cones of different opening angle are used, in some embodiments, to obtain a multi-resolution representation.

## BRIEF DESCRIPTION OF THE DRAWINGS

Embodiments of the invention will be described with reference to the accompanying drawings, of which:

Fig. 1a shows an image;
Fig. 1b shows a reduced version of the image of Fig. 1a;
Fig. 1c shows a rotated version of the image of Fig. 1a;
Fig. 1d shows a blurred version of the image of Fig. 1a;

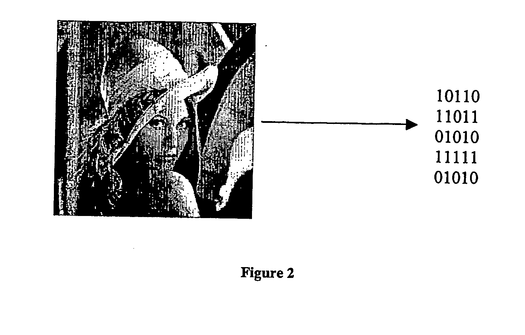

Fig. 2 shows an image and a bit string representation of the image according to the prior art;
Fig. 3 is a diagram illustrating steps of a method of an embodiment of the invention;
Fig. 4 is a diagram illustrating steps of another method of an embodiment of the invention;
Fig. 5 is a diagram illustrating the line parameterisation for the trace transform;
Figs. 6a-c illustrate functions derived from different versions of an image;
Fig. 7 is a block diagram of an apparatus according to an embodiment of the invention;
Fig. 8 is a block diagram illustrating an embodiment using multiple trace transforms;
Fig. 9 illustrates bit stream produced according to the embodiment of Fig. 8.
Fig. 10 illustrates the interval strips in the original image when decomposing the d-parameter of trace transform.
Fig. 11 illustrates the double-cones in the original image when decomposing the $\theta$-parameter of trace transform.
Fig. 12 illustrates the decomposition of the trace transform in the d-parameter.
Fig. 13 illustrates the decomposition of the trace transform in the $\theta$-parameter.

## DETAILED DESCRIPTION OF THE EMBODIMENTS

Various embodiments for deriving a representation of an image, specifically an image identifier, and using such a representation/identifier for the purposes of, for example, identification, matching or validation of an image or images, will be described below. The present invention is especially useful for, but is not restricted to, identifying an image. In the described embodiments, an "image identifier" (sometimes simply "identifier") is an example of a representation of an image and the term is used merely to denote a representation of an image, or descriptor.

The skilled person will appreciate that the specific design of an image identification apparatus and method, according to an embodiment of the present invention, and the derivation of an image identifier for use in image identification, is determined by design requirements. Such design requirements relate to the type of image modifications that the image identifier should be robust to, the size of the identifier, extraction and matching complexity, target false-alarm rate, etc.

The following embodiment illustrates a generic design that results in an identifier that is robust to the following modifications to an image (this is not an exhaustive list):

- Colour reduction,
- Blurring,
- Brightness Change,
- Flip (left-right & top-bottom),
- Greyscale Conversion,
- Histogram Equalisation,
- JPEG Compression,
- Noise,
- Rotation and
- Scaling.

It has been found that this generic design typically can achieve a very low false-alarm rate of 1 part per million (ppm) on a broad class of images.

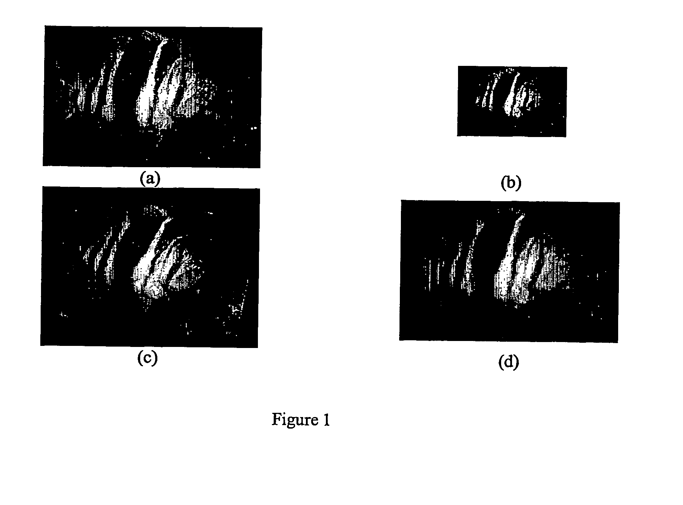

Fig. 1 shows an example of an image and modified versions of the image. More specifically, Fig. 1a is an original image, Fig. 1b is a reduced version of the image of Fig. 1a, Fig. 1c is a rotated version of the image of Fig. 1a, and Fig. 1d is a blurred version of the image of Fig. 1a.

An embodiment of the invention derives a representation of an image, and more specifically, an image identifier, by processing signals corresponding to the image.

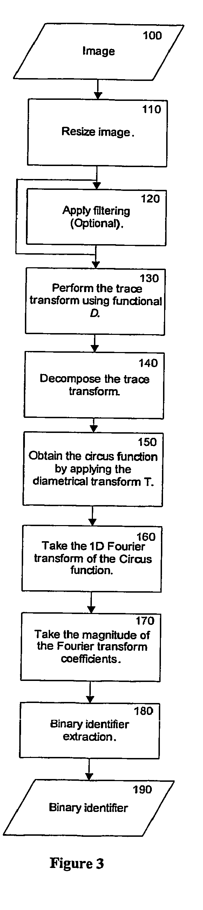

Fig. 3 shows steps of a method of deriving an image identifier according to an embodiment of the invention, that is, an identifier extraction process.

In the initial stage of extraction, the image is pre-processed by resizing (step 110) and optionally filtering (step 120). The resizing step 110 is used to normalise the images before processing. The step 120 can comprise of filtering to remove effects such as aliasing caused by any processing performed on the image and/or region selection rather than using the full original image. In a preferred embodiment of the method, a circular region is extracted from the centre of the image for further processing.

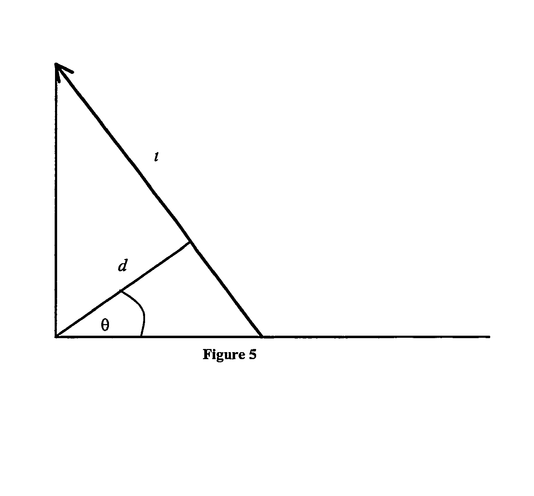

In step 130, a Trace transform $T(d, \theta)$ is performed. The trace transform projects all possible lines over an image and applies one or more functionals over these lines. As previously stated, a functional is a real-valued function on a vector space V, usually of functions. In the case of the Trace transform a functional is applied over lines in the image. As shown in Fig. 5, a line is parameterised by two parameters, $d$ and $\theta$. The result of the Trace transform may be decomposed to reduce the resolution thereof, as described below, in step 140. In step 150, a further functional can then be applied to the columns of the trace transform to give a vector of real numbers. This second functional is known as the diametrical functional and the resulting vector is known as the circus function. A third functional, the circus functional, can be applied to the circus function to give a single number. The properties of the result can be controlled by appropriate choices of the three different functionals (trace, diametrical and circus). Full details of the Trace transform, including examples of images and corresponding trace transforms, can be found, for example, in reference [1] *infra:* Alexander Kadyrov and Maria Petrou, "The

Trace Transform and its Applications", IEEE Trans. PAMI, 23 (8), Aug., 2001, pp 811-828. In the method of this embodiment, only the first two steps are taken in the Trace transform to obtain a 1D circus function.

In one particular example of the method, the Trace transform $T(d, \theta)$ of an image is extracted with the trace functional T

$$\int \xi(t)dt , \qquad\qquad (1)$$

and the circus function is obtained by applying the diametrical functional P

$$\max(\xi(t)) . \qquad (2)$$

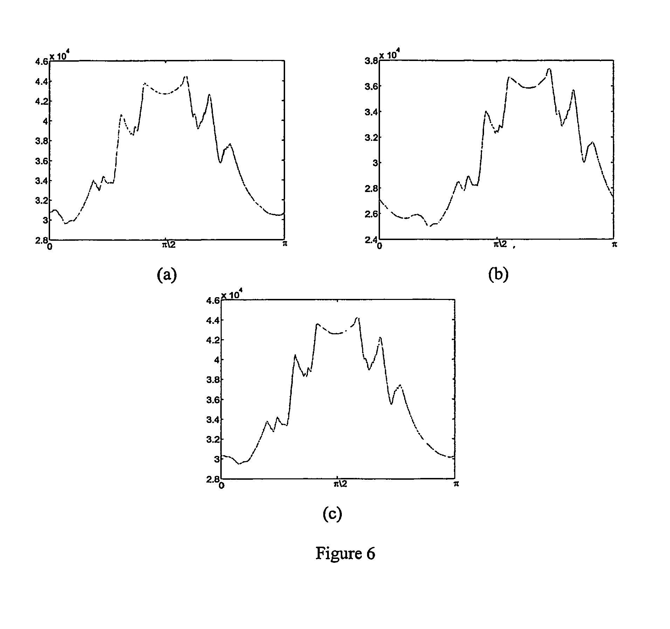

Examples of how the circus function is affected by different image processing operations can be seen in Fig. 6, which shows the circus function corresponding to different versions of an image. Fig. 6(a) corresponds to an original image; Fig. 6(b) corresponds to a rotated version of the image and Fig. 6(c) corresponds to a blurred version of the image. It can be seen that rotation shifts the function (as well as causing a scale change).

It can be shown that for the majority of image modification operations listed above, and with a suitable choice of functionals *T, P,* the circus function *f(a)* of image a is only ever a shifted or scaled (in amplitude) version of the circus function f(a') of the modified image a' (see Section 3 of reference [1] infra).

$$f(a') = \kappa f(a - \theta) . \qquad (3)$$

According to the method described in co-pending European patent application EP 06255239.3, frequency components of a frequency representation of the circus function may be used to derive an image identifier. It will be appreciated that other techniques for deriving an image descriptor are possible, and may be used in conjunction with the present invention. In one example, the image identifier may be derived from a Fourier Transform (or equally a Haar Transform) of the circus function.

Thus, by taking the Fourier transform of equation (3) gives:

$$F(\Phi) = F[\kappa f(a - \theta)], \qquad (4)$$

$$= \kappa F[f(a - \theta)], \qquad (5)$$

$$= \kappa \exp^{-j\theta\Phi} F[f(a)] . \qquad (6)$$

Then taking the magnitude of equation (6) gives

$$|F(\Phi)| = |\kappa F[f(a)]| . \qquad (7)$$

From equation (7) it can be seen that the modified image and original image are now equivalent except for the scaling factor $\kappa$ .

According to the example, a function c($\omega$) is now defined on the magnitude coefficients of a plurality of Fourier transform coefficients. One illustration of this function is taking the difference between each coefficient and its neighbouring coefficient

$$c(\omega) = |F(\omega)| - |F(\omega + 1)| \qquad (8)$$

A binary string can be extracted by applying a threshold to the resulting vector (equation 8) such that

$$b_\omega = \begin{cases} 0, c(\omega) < 0 \\ 1, c(\omega) >= 0 \end{cases} \qquad \text{for all } \omega , \qquad (9)$$

The image identifier is then made up of these values $B = \{b_0,...,b_n\}$.

To perform identifier matching between two different identifiers $B_1$ and $B_2$, both of length N, the normalised Hamming distance is taken

$$H(B_1, B_2) = \frac{1}{N} \sum_N B_1 \otimes B_2 , \qquad (10)$$

where $\otimes$ is the exclusive OR (XOR) operator. Other methods of comparing identifiers or representations can be used.

The performance may be further improved by selection of certain bits in the identifier. The bits corresponding to the lower frequencies are generally more robust and the bits corresponding to the higher frequencies are more discriminating. In one particular embodiment of the invention the first bit is ignored and then the identifier is made up of the next 64 bits.

In accordance with one embodiment of the present invention, step 140 of decomposing the two dimensional function of the image, resulting from the Trace transform (or equivalent) involves reducing the resolution thereof The reduced resolution may be achieved by processing in either of its two dimensions, $d$ or $\theta$, or in both dimensions.

Thus, the resolution may be reduced in the distance dimension in the "Trace-domain" by sub-sampling the $d$-parameter e.g. by summing or integrating over intervals for $d$ along the columns (corresponding to values for $\theta$), as in Fig. 12. This corresponds to projecting strips of width $\Delta d$ over the image (i.e. in the image domain) during the Trace transform, as shown in Fig. 10. It will be appreciated that any technique for sub-sampling, that is reducing the resolution of the Trace transform, over intervals for the distance parameter $d$ may be used. Thus, any statistical calculation that reduces the quantity of data whilst preserving the essence of the data, may be used, of which summing and integration are merely examples.

Alternatively, or additionally, the resolution may be reduced in the angle dimension in the "Trace domain" by sub-sampling the $\theta$ parameter e.g. by summing or integrating over intervals for $\theta$ along the rows (corresponding to values for $d$), as in Fig. 13. This is approximately equivalent to projecting double cones with opening-angle $\Delta\theta$ over the image (i.e. in the image domain) during the Trace transform, as shown Fig. 11. It will be appreciated that any technique for sub-sampling, that is reducing the resolution of the Trace transform, over intervals for the angle parameter $\theta$ may be used. Thus, any statistical calculation that reduces the quantity of data whilst preserving the essence of the data, may be used, of which summing and integration are merely examples.

In accordance with another embodiment of the present invention, the step 140 of decomposing could be performed in the "image domain" i.e. after step 120 and typically in combination with step 130 of Fig. 3. In one example, step 140 would combine or decompose sets of lines in the image itself, and perform a Trace transform (or other operation) over these lines to derive an image identifier. For example, lines of the image of one pixel width can be combined so that effectively multiple lines of the image can be processed together in step 130. The set of lines may be, for example, parallel lines and/or lines defined by double cones as shown in Fig. 10 and Fig. 11, respectively. The number of the lines combined corresponds to the interval described above. Thus, in this embodiment, the Trace transform is effectively modified to trace selected sets of lines across the image, instead of tracing all lines across the image, as in the conventional Trace transform.

As the skilled person will appreciate, other techniques for decomposing in the image domain are possible.

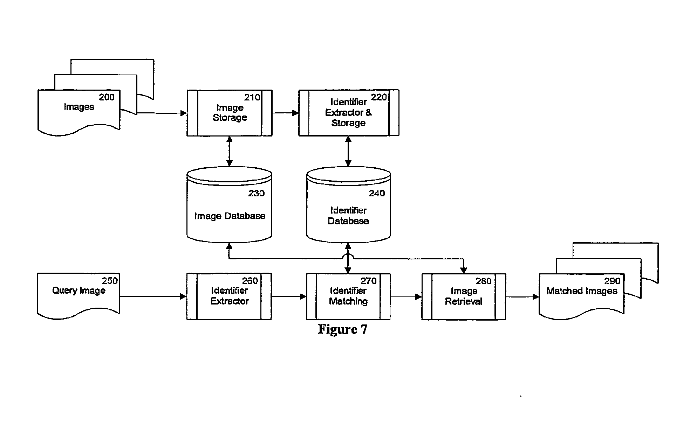

An example of an apparatus according to an embodiment of the invention for carrying the above methods is shown in Fig. 7. Specifically, images 200 are received by image storage module 210 and stored in image database 230. In addition, identifier extractor and storage module 220 extracts an image identifier for each received image, in accordance with the method of the present invention, and stores the image identifiers in identifier database 240, optionally together with other information relevant to image contents, as appropriate.

Fig. 7 additionally shows an apparatus embodying an image search engine that uses the image identifiers extracted using the above methods. Image verification or matching may be performed by an image search engine in response to receiving a query image 250. An image identifier for the query image 250 is extracted in identifier extractor module 260, in accordance with the method of the present invention. Identifier matching module 270 compares the image identifier for the query image 250 with the image identifiers stored in identifier database 240. Image retrieval module 280 retrieves matched images 290 from image database 230, the matched images 290 having the image identifiers matching the query image identifier, as discussed in more detail below.

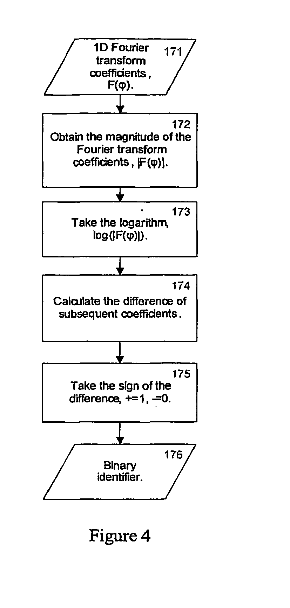

Fig. 4 shows an alternative method of defining a binary function on Fourier transform coefficients. In particular, after obtaining Fourier transform coefficients (step 171), the logarithm of the magnitude of a plurality of Fourier transform coefficients is obtained (steps 172 and 173). The difference of subsequent coefficients is calculated (step 174) similar to equation (8) above, following by taking the sign of the difference and assigning binary values according to the sign (step 175), which are then used to form the binary identifier. It will be appreciated that this technique can be used for frequency coefficients of other frequency representations of a function of the image, including a Haar Transform.

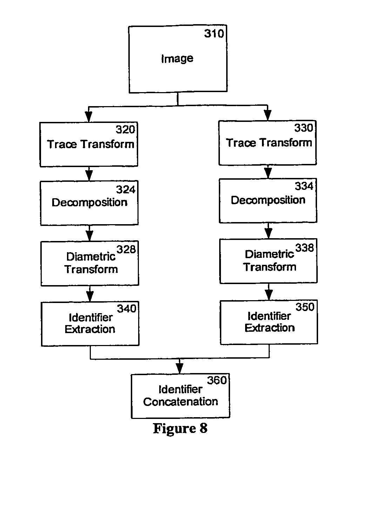

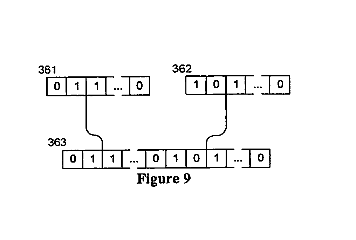

The basic identifier described previously can be improved by using multiple reduced resolution Trace transforms to derive respective identifiers and combining bits from the separate identifiers as shown in Figs. 8 and 9. The specific method for combining binary strings 361 and 362 from two separate reduced resolution Trace transforms is to concatenate them to obtain the identifier 363.

Good results may be obtained in this way by using the Trace functional *T* in equation (1) *supra* with the diametrical functional *P* given by equation (2) *supra* for one binary string and then Trace functional (1) with the diametrical functional (11)

$$\int |\xi(t)'| dt, \qquad\qquad (11)$$

to obtain the second string. The first bit of each binary string is skipped and then the subsequent 64 bits from both strings are concatenated to obtain a 128 bit identifier.

Significant performance improvements may be obtained by using a multi-resolution representation of the Trace transform, in accordance with the present invention. In particular, decomposition may be performed in one or two dimensions. The diametrical functional can then be applied and the binary string extracted as previously. Typical results show that using the decomposition improves the detection rates at a false error rate of 1 part per million from around 80% to 98%.

This multi-resolution Trace transform may be created by sub-sampling an original Trace transform, to reduce its resolution, in either of its two dimensions, *d* or $\theta$, or in both dimensions, as described above. In the "Trace-domain" sub-sampling the *d*-parameter is performed by e.g. integrating over intervals along the columns, as in Fig. 12. This corresponds to projecting strips of width $\Delta d$ over the image during the Trace transform, as shown in Figure 10. Sub-sampling can also take place by e.g. integrating over intervals in the $\theta$ parameter, that is along the rows, see Fig. 13. This is approximately equivalent to integrating over double-cones with opening-angle $\Delta\theta$ during the Trace transform, see Fig. 11. Alternatively, as described above these operations could be performed in the "image domain".

Multiple basic identifiers can be extracted from one Trace transform by using a multi-resolution decomposition, where sub-sampling takes place over a range of different interval widths to generate the multi-resolution representation composed of the multiple basic identifiers. Ideally, the multi-resolution representation uses multiple identifiers derived using a range of interval widths. For instance, each interval width may be at least a factor of two different from other interval widths. Good results were typically obtained by using a system, where the output of the trace transform is of size 600 x 384, and then the d-parameter is sub-sampled by integrating using bands of widths 8, 16, 32, 64 & 128, similarly the $\theta$-parameter is sub-sampled by e.g. integrating using bands of widths 3, 6, 12, & 24.

One application of the identifier is as an image search engine. A database is constructed by extracting and storing the binary identifier along with associated information such as the filename, the image, photographer, date and time of capture, and any other useful information. Then given a query image $a_q$ the binary identifier is extracted and is compared with all identifiers in the database $B_0 \ldots B_M$. All images with a Hamming distance to the query image below a threshold are returned.

**Alternative implementations**

A range of different Trace and diametrical functionals can be used, for example (a non-exhaustive list) :

$$\int \xi(t) dt, \qquad\qquad (A1)$$

$$\left( \int |\xi(t)|^q dt \right)^r, \qquad \text{where q>0} \qquad (A2)$$

$$\int |\xi(t)'| dt, \qquad\qquad (A3)$$

$$\int (t - X1)^2 \xi(t) dt, \quad \text{where} \quad X1 = \frac{\int t\xi(t) dt}{A1} \tag{A4}$$

$$\sqrt{\frac{A4}{A1}}, \tag{A5}$$

$$\max(\xi(t)), \tag{A6}$$

$$A6 - \min(\xi(t)). \tag{A7}$$

Two or more identifiers can be combined to better characterise an image. The combination is preferably carried out by concatenation of the multiple identifiers.

For geometric transformations of higher order than rotation, translation and scaling the version of the identifier described above is not appropriate; the relationship in equation (3) does not hold. The robustness of the identifier can be extended to affine transformations using a normalisation process full details of which can be found in reference [2] *infra.* Two steps are introduced to normalise the circus function, the first involves finding the so called associated circus, then the second step involves finding the normalised associated circus function. Following this normalisation it is shown that the relationship in equation (3) is true. The identifier extraction process can now continue as before.

Some suitable Trace functionals for use with the normalisation process are given below in (G1) & (G2), a suitable choice for the diametrical functional is given in (G3).

$$T(g(t)) = \int_{R^+} rg(r) dr, \tag{G1}$$

$$T(g(t)) = \int_{R^+} r^2 g(r) dr, \tag{G2}$$

$$P(h(t)) = \sum_k \left| h(t_{k+1}) - h(t_k) \right|, \tag{G3}$$

where $r \equiv t-c$, $c \equiv median(\{t_k\}_k, \{|g(t_k)|\})$. The weighted median of a sequence $y_1, y_2, ..., y_n$ with nonnegative weights $w_1, w_2, ..., w_n$ is defined by identifying the maximal index m for which

$$\sum_{k<m} w_k \leq \frac{1}{2} \sum_{k \leq n} w_k, \tag{12}$$

assuming that the sequence is sorted in ascending order according to the weights. If the inequality (12) is strict the median is $y_m$. However, if the inequality is an equality then the median is $(y_m + y_{m-1}) / 2$,

Rather than constructing the identifier from a continuous block of bits the selection can be carried out by experimentation. One example of how to do this is to have two sets of data i) independent images ii) original and modified images. The performance of the identifier can be measured by comparing the false acceptance rate for the independent data and false rejection rate for the original and modified images. Points of interest are the equal error rate or the false rejection rate at a false acceptance rate of $1\times10^{-6}$. The optimisation starts off with no bits selected. It is possible to examine each bit one at a time to see which bit gives the best performance (say in terms of the equal error rate or some similar measure). The bit that gives the best result should be selected. Then, all the remaining bits should be tested to find which gives the best performance in combination with the first bit. Again, the bit with the lowest error rate is selected. This procedure is repeated until all bits are selected. In this way, the bit combination that results in the overall best performance can be determined.

A multi-resolution decomposition of the trace transform can be formed as described above by summing or integrating over intervals of the parameter (either d or θ). As indicated above, any statistical technique can be used to achieve decomposition or resolution reduction and other possibilities include calculating statistics such as the mean, max, min etc. Other functionals may also be applied over these intervals.

Moreover, a structure could be applied to the identifier to improve search performance. For example a two pass search could be implemented, half of the bits are used for an initial search and then only those with a given level of accuracy are accepted for the second pass of the search.

The identifier can be compressed to further reduce its size using a method such as Reed-Muller decoder or Wyner-Ziv decoder.

## Alternative applications

The identifier can also be used to index the frames in a video sequence. Given a new sequence identifiers can be extracted from the frames and then searching can be performed to find the same sequence. This could be useful for copyright detection and sequence identification.

Multiple broadcasters often transmit the same content, for example advertisements or stock news footage. The identifier can be used to form links between the content for navigation between broadcasters.

Image identifiers provide the opportunity to link content through images. If a user is interested in a particular image on a web page then there is no effective way of finding other pages with the same image. The identifier could be used to provide a navigation route between images.

The identifier can be used to detect adverts in broadcast feeds. This can be used to provide automated monitoring for advertisers to track their campaigns.

There are many image databases in existence, from large commercial sets to small collections on a personal computer. Unless the databases are tightly controlled there will usually be duplicates of images in the sets, which requires unnecessary extra storage. The identifier can be used as a tool for removing or linking duplicate images in these datasets.

In this specification, the term "image" is used to describe an image unit, including after processing, such as filtering, changing resolution, upsampling, downsampling, but the term also applies to other similar terminology such as frame, field, picture, or sub-units or regions of an image, frame etc. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images. The image may be a greyscale or colour image, or another type of multi-spectral image, for example, IR, UV or other electromagnetic image, or an acoustic image etc.

In the embodiments, a frequency representation is derived using a Fourier transform, but a frequency representation can also be derived using other techniques such as a Haar transform. In the claims, the term Fourier transform is intended to cover variants such as DFT and FFT.

The invention is preferably implemented by processing electrical signals using a suitable apparatus.

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet.

## References

[1] Alexander Kadyrov and Maria Petrou, "The Trace Transform and Its Applications", IEEE Trans. PAMI, 23 (8), Aug., 2001, pp 811-828.

[2] Maria Petrou and Alexander Kadyrov, "Affine Invariant Features from the Trace Transform", IEEE Trans. on PAMI, 26 (1), Jan, 2004, pp 30-44.

As the skilled person will appreciate, many variations and modifications can be made to the described embodiments. For example, the present invention can be implemented in embodiments combining implementations of the existing and relating techniques, known to the skilled person. It is intended to include all such variations, modifications and equivalents to the described embodiments, that fall within the scope of the present invention, as defined in the accompanying claims.

**Claims**

1. A method of deriving a representation of an image (310) by processing signals corresponding to the image, the method comprising:

   processing the image using a Trace transform of the image derived by applying a functional over all lines of the image, wherein the result of the Trace transform is a two dimensional function having distance and angle parameters in a Trace domain, **characterised by** processing said two dimensional function of the image in the Trace domain by sub-sampling, by performing summation or integration over predetermined intervals of at least one parameter of the distance and angle parameters of the two dimensional function of the image to derive a reduced resolution two dimensional function of the image in the Trace domain, and further applying a functional to the reduced resolution two dimensional function of the image to derive a one dimensional function of the image.

2. A method as claimed in claim 1 wherein the step of processing comprises processing a two dimensional function of the image by sub-sampling values of the two dimensional function of the image over predetermined intervals in a second dimension thereof, to reduce the resolution of the two dimensional function of the image in the second dimension.

3. A method as claimed in any preceding claim, wherein the step of using the reduced resolution two dimensional function of the image, to derive the representation of the image, comprises deriving a one-dimensional function of the image wherein the one dimensional function is preferably a circus function, or a function derived from a circus function.

4. A method as claimed in any preceding claim, further comprising:

   deriving a further function of the image, wherein the further function of a translated, scaled or rotated version of the image is a translated or scaled version of the further function of the image;
   wherein the further function is preferably a circus function, or a function derived from a circus function.

5. A method as claimed in claim 3 or claim 4, wherein the step of using the reduced resolution two dimensional function of the image to derive the representation of the image comprises:

   using a plurality of frequency components of a frequency representation of the one dimensional function or further function to derive a representation of the image wherein the frequency components are preferably determined using a Fourier Transform or a Haar Transform.

6. A method as claimed in claim 5, wherein the representation of the image is derived using the steps of:

   calculating the magnitude, or logarithm of the magnitude, of a plurality of frequency coefficients, and
   determining a difference between the magnitude, or logarithm of the magnitude, of each coefficient and its subsequent coefficient; the method preferably further comprising:

   applying a threshold to each determined difference to derive a series of binary values, wherein applying the threshold provides a binary value of 0 if a said difference is less than zero, and a binary value of 1 if a said difference is greater than or equal to zero;
   wherein the image representation preferably comprises the binary values defined by the magnitudes, or logarithm of magnitudes, of the plurality of frequency components.

7. A method as claimed in any preceding claim, wherein the method comprises deriving multiple representations of the image, by performing the step of processing over a range of different widths for said intervals, and combining the multiple representations to generate a multi-resolution representation.

8. A method of identifying an image comprising:

   deriving a representation of the image using a method as claimed in any preceding claim, and associating the representation with the image.

9. A method of comparing images comprising comparing representations of each image derived using the method of any preceding claim; wherein the comparison preferably comprises determining a Hamming distance, the method preferably further comprising selecting images based on comparisons of representations.

10. Use, including transmission, reception or processing, of a representation of an image derived using the method of any one of claims 1 to 7.

11. Apparatus for executing the method of any one of claims 1 to 9.

12. A computer-readable medium comprising instructions that, when executed, perform the method of any one of claims 1 to 9.


**Patentansprüche**

1. Verfahren zum Ableiten einer Darstellung eines Bildes (310) durch Verarbeiten von Signalen entsprechend des Bildes, das Verfahren umfassend:

   Verarbeiten des Bildes unter Verwendung einer Trace-Transformation des Bildes, welche durch Anwenden eines Funktionals auf alle Linien des Bildes abgeleitet wird, wobei das Ergebnis der Trace-Transformation eine zweidimensionale Funktion mit Entfernungs- und Winkelparametern in einer Trace-DOmäne ist, **gekennzeichnet durch** Verarbeiten der zweidimensionalen Funktion des Bildes in der Trace-DOmäne **durch** Unterabtasten, **durch** Durchführen einer Summierung oder Integration über vorbestimmte Intervalle mindestens eines Parameters der Entfernungs- und Winkelparameter der zweidimensionalen Funktion des Bildes, um eine zweidimensionale Funktion des Bildes in der Trace-Domäne mit reduzierter Auflösung abzuleiten, und ferner Anwenden eines Funktionals auf die zweidimensionale Funktion des Bildes mit reduzierter Auflösung, um eine eindimensionale Funktion des Bildes abzuleiten.

2. Verfahren nach Anspruch 1, wobei der Schritt des Verarbeitens ein Verarbeiten einer zweidimensionalen Funktion des Bildes durch Unterabtasten von Werten der zweidimensionalen Funktion des Bildes über vorbestimmte Intervalle in einer zweiten Dimension davon umfasst, um die Auflösung der zweidimensionalen Funktion des Bildes in der zweiten Dimension zu reduzieren.

3. Verfahren nach einem der vorhergehenden Ansprüche, wobei der Schritt des verwendens der zweidimensionalen Funktion des Bildes mit reduzierter Auflösung, um die Darstellung des Bildes abzuleiten, Ableiten einer eindimensionalen Funktion des Bildes umfasst, wobei die eindimensionale Funktion vorzugsweise eine Kreisfunktion (circus function) oder eine Funktion ist, welche aus einer Kreisfunktion (circus function) abgeleitet ist.

4. Verfahren nach einem der vorhergehenden Ansprüche weiterhin umfassend:

   Ableiten einer weiteren Funktion des Bildes, wobei die weitere Funktion einer translatierten, skalierten oder rotierten Version des Bildes eine translatierte oder skalierte Version der weiteren Funktion des Bildes ist; wobei die weitere Funktion vorzugsweise eine Kreisfunktion (circus function) oder eine Funktion ist, welche aus einer Kreisfunktion (circus function) abgeleitet ist.

5. Verfahren nach Anspruch 3 oder 4, wobei der Schritt des Verwendens der zweidimensionalen Funktion des Bildes mit reduzierter Auflösung, um die Darstellung des Bildes abzuleiten, Folgendes umfasst:

   Verwenden mehrerer Frequenzkomponenten einer Frequenzdarstellung der eindimensionalen Funktion oder der weiteren Funktion, um eine Darstellung des Bildes abzuleiten, wobei die Frequenzkomponenten vorzugsweise unter Verwendung einer Fourier-Transformation oder einer Haar-Transformation bestimmt werden.

6. Verfahren nach Anspruch 5, wobei die barstellung des Bildes unter Verwendung der folgenden Schritte abgeleitet wird:

Berechnen der Größenordnung oder des Logarithmus der Größenordnung von mehreren Frequenzkoeffizienten und
Bestimmen einer Differenz zwischen der Größenordnung oder des Logarithmus der Größenordnung von jedem Koeffizienten und seinem nachfolgenden Koeffizienten; wobei das Verfahren vorzugsweise weiterhin Folgendes umfasst:

Anwenden eines Schwellenwerts auf jede bestimmte Differenz, um eine Reihe binärer Werte abzuleiten, wobei das Anwenden des Schwellenwerts einen binären Wert von 0 bereitstellt, wenn die Differenz kleiner als null ist, und einen binären Wert von 1 bereitstellt, wenn die Differenz größer oder gleich null ist; wobei die Bilddarstellung vorzugsweise die binären Werte umfasst, welche durch die Größenordnungen oder den Logarithmus der Größenordnungen der mehreren Frequenzkomponente definiert sind.

7. Verfahren nach einem der vorhergehenden Ansprüche, wobei das verfahren Ableiten mehrerer Darstellungen des Bildes durch Durchführen des Schritts des Verarbeitens über einem Bereich von verschiedenen Breiten für die Intervalle und Vereinigen der mehreren Darstellungen umfasst, um eine Darstellung mit Mehrfachauflösung zu erzeugen.

8. Verfahren zum Identifizieren eines Bildes Folgendes umfassend:

Ableiten einer Darstellung des Bildes unter Verwendung eines Verfahrens nach einem der vorhergehenden Ansprüche und
Assoziieren der Darstellung mit dem Bild.

9. Verfahren zum vergleichen von Bildern umfassend Vergleichen von Darstellungen der jeweiligen Bilder, welche unter Verwendung des Verfahrens nach einem der vorhergehenden Ansprüche abgeleitet sind; wobei der Vergleich vorzugsweise Bestimmen einer Hamming-Entfernung umfasst, wobei das Verfahren vorzugsweise weiterhin Auswählen von Bildern auf der Grundlage von vergleichen der Darstellungen umfasst.

10. Verwenden einschließlich Übertragung, Empfang oder Verarbeiten einer Darstellung eines Bildes, welches unter Verwendung des Verfahrens nach einem der Ansprüche 1 bis abgeleitet ist.

11. vorrichtung zum Ausführen des Verfahrens nach einem der Ansprüche 1 bis 9.

12. computerlesbares Medium, welches Anweisungen umfasst, welche, wenn sie ausgeführt werden, das Verfahren nach einem der Ansprüche 1 bis 9 durchführen.


## Revendications

1. Procédé d'obtention d'une représentation d'une image (310) en traitant des signaux qui correspondent à l'image, le procédé comprenant une étape consistant à:

traiter l'image en utilisant une transformation de Trace de l'image obtenue en appliquant un fonctionnel sur toutes les lignes de l'image, dans lequel le résultat de la transformation de Trace est une fonction bidimensionnelle qui présente des paramètres de distance et d'angle dans un domaine de Trace, **caractérisé par** un traitement de ladite fonction bidimensionnelle de l'image dans le domaine de Trace par sous-échantillonnage, par exécution d'une sommation ou d'une intégation sur des intervalles prédéterminés d'un paramètre au moins parmi les paramètres de distance et d'angle de la fonction bidimensionnelle de l'image de façon à obtenir une fonction bidimensionnelle à résolution réduite de l'image, dans le domaine de Trace, et par applications d'un fonctionnel à la fonction bidimensionnelle à résolution réduite de l'image de façon à obtenir une fonction unidimensionnelle de image.

**2.** Procédé selon la revendication 1, dans lequel l'étape de traitement comprend une étape consistant à traiter une fonction bidimensionnelle de l'image en sous-échantillonant des valeurs de la fonction bidimensionnelle de l'image sur des intervalles prédéterminés dans une seconde dimension de celle-ci, de façon à réduire la résolution de la fonction bidimensionnelle de l'image dans la seconde dimension.

**3.** Procédé selon l'une quelconque des revendications précédentes, dans lequel l'étape consistant à utiliser la fonction bidimensionnelle à résolution réduite de l'image, de façon à obtenir la représentation de l'image, comprend une étape consistant à obtenir une fonction unidimensionnelle de l'image, dans lequel la fonction unidimensionnelle est de préférence une fonction cercle, ou une fonction obtenue à partir d'une fonction cercle.

**4.** Procédé selon l'une quelconque des revendications précédentes, comprenant en outre une étape consistant à :

obtenir une autre fonction de l'image, dans lequel l'autre fonction d'une version translatée, mise à l'échelle ou tournée de l'image est une version translatée ou mise à l'échelle de l'autre fonction de l'image ;
dans lequel l'autre fonction est de préférence une fonction cercle, ou une fonction obtenue à partir d'une fonction cercle.

**5.** Procédé selon la revendication 3 ou la revendication 4, dans lequel l'étape consistant à utiliser la fonction bidimensionnelle à résolution réduite de l'image de façon à obtenir la représentation de l'image comprend une étape consistant à :

utiliser une pluralité de composantes fréquentielles d'une représentation frequentielle de la fonction unidimensionnelle ou d'une autre fonction de façon à obtenir une representation de l'image, dans lequel les composantes fréquentielles sont déterminées de préférence en utilisant une transformation de Fourier ou une transformation de Haar.

**6.** Procédé selon la revendication 5, dans lequel la représentation de l'image est obtenue en utilisant les étapes consistant à :

calculer la grandeur, ou le logarithme de la grandeur, d'une pluralité de coefficients de fréquence ; et
déterminer une différence entre la grandeur, ou le logarithme de la grandeur, de chaque coefficient et celle de son coefficient suivant; le procédé comprenant en outre de préférence une étape consistant à :

appliquer un seuil à chaque différence déterminée de façon à obtenir une série de valeurs binaires, dans lequel l'application du seuil fournit une valeur binaire égale à 0 si ladite différence est inférieure à zéro, et une valeur binaire égale à 1 si ladite différence est supérieure ou égale à zéro ;
dans lequel la représentation d'image comprend de préférence les valeurs binaires définies par les grandeurs, ou le logarithme des grandeurs, de la pluralité de composantes fréquentielles.

**7.** Procédé selon l'une quelconque des revendications précédentes, dans lequel le procédé comprend les étapes consistant à obtenir de multiples représentations de l'image, en exécutant l'étape de traitement sur une plage de largeurs différentes desdits intervalles, et à combiner les multiples représentations de façon à générer une représentation à plusieurs résolutions.

**8.** Procédé d'identification d'une image, comprenant les étapes consistant à :

obtenir une représentation de l'image en utilisant un procédé selon l'une quelconque des revendications précédentes ; et
associer la représentation à l'image.

**9.** Procédé de comparaison d'images, comprenant une étape consistant à comparer des représentations de chaque image obtenue en utilisant le procédé selon l'une quelconque des revendications précédentes ; dans lequel l'étape de comparaison comprend de préférence une étape consistant à déterminer une distance de Hamming, le procédé comprenant en outre de préférence une étape consistant à sélectionner des images sur la base de comparaisons des représentations.

**10.** Utilisation, y compris une transmission, une réception ou un traitement, d'une représentation d'une image obtenue en utilisant un procédé selon l'une quelconque des revendications 1 à 7.

**11.** Appareil destiné à exécuter un procédé selon l'une quelconque des revendications 1 à 9.

**12.** Support pouvant être lu par un ordinateur comprenant des instructions qui, quand elles sont exécutées, réalise un procédé selon l'une quelconque des revendications 1 à 9.

(a)

(b)

(c)

(d)

Figure 1

10110
11011
01010
11111
01010

**Figure 2**

100
Image

110
Resize image.

120
Apply filtering
(Optional).

130
Perform the trace
transform using functional
D.

140
Decompose the trace
transform.

150
Obtain the circus function
by applying the
diametrical transform T.

160
Take the 1D Fourier
transform of the Circus
function.

170
Take the magnitude of
the Fourier transform
coefficients.

180
Binary identifier
extraction.

190
Binary identifier

Figure 3

Figure 4

**Figure 5**

(a)

(b)

(c)

Figure 6

| | | | | | |
|---|---|---|---|---|---|
| Images 200 | → | Image Storage 210 | → | Identifier Extractor & Storage 220 | |

Image Database 230

Identifier Database 240

| | | | | | | | | | |
|---|---|---|---|---|---|---|---|---|---|
| Query Image 250 | → | Identifier Extractor 260 | → | Identifier Matching 270 | → | Image Retrieval 280 | → | Matched Images 290 |

**Figure 7**

Figure 8

**Figure 9**

**Figure 10**

**Figure 11**

**Figure 12**

**Figure 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 06255239 A

- EP 1498848 A

**Non-patent literature cited in the description**

- A new shape descriptor defined on the Radon transform. **TABBONE et al.** COMPUTER VISION AND IMAGE UNDERSTANDING. ACADEMIC PRESS, April 2006, vol. 102, 42-51
- **MARIA PETROU ; ALEXANDER KADYROV.** Affine invariant features from the trace transform. *IEEE Transactions on Pattern Analysis and Machine Intelligence,* January 2004

- *IEEE Trans. PAMI,* August 2001, vol. 23 (8), 811-828
- **ALEXANDER KADYROV ; MARIA PETROU.** The Trace Transform and Its Applications. *IEEE Trans. PAMI,* August 2001, vol. 23 (8), 811-828
- **MARIA PETROU ; ALEXANDER KADYROV.** Affine Invariant Features from the Trace Transform. *IEEE Trans. on PAMI,* January 2004, vol. 26 (1), 30-44